# EUROPEAN PATENT APPLICATION

(11) **EP 4 674 672 A1**
(43) Date of publication of application: **07.01.2026**
(21) Application number: 25180780.6
(22) Date of filing: 04.06.2025
(51) Int. Cl.: B60L 53/14, B60L 53/66

(54) **WAKE-UP CIRCUIT OF ELECTRIC VEHICLE CHARGER AND METHOD FOR OPERATING THE SAME**

(30) Priority: 03.07.2024 US 202463667275 P; 06.02.2025 CN 202510133633
(71) Applicant: DELTA ELECTRONICS, INC., Taoyuan City 320023 (TW)
(72) Inventor: HO, Ming-Chang, 320023 Taoyuan City (TW); HSU, Jui-Yuan, 320023 Taoyuan City (TW)
(74) Representative: 2K Patentanwälte Blasberg Kewitz & Reichel

(57) **Abstract**

An electric vehicle charger (100) is used to couple a power device and an electric vehicle (200) by a power path (1), and a method for operating the electric vehicle charger (100) includes steps of: entering a power outage state of the system controller (4) of the electric vehicle charger (100) when the power device (300) when the power device power (Pa) fails to supply a device power (Pa) to the power path (1). According to a trigger (Tg), informing the electric vehicle (200) to set a feed mode by a transistor (Q) that is turned on in the power outage state, so that the electric vehicle (200) to provide a vehicle power (Pv) to the power path (1). Causing the auxiliary power circuit (3) to provide the first DC voltage (Vdc1) to supply power to the system controller (4) according to the vehicle power (Pv), thereby enabling the system controller (4) and performing handshake communication with the electric vehicle (200).

## Description

### BACKGROUND

### Technical Field

The present disclosure relates to a wake-up circuit and a method for operating the same, and more particularly to the wake-up circuit for an electric vehicle charger and the method for operating the same.

### Description of Related Art

The statements in this section merely provide background information related to the present disclosure and do not necessarily constitute prior art.

Currently, as electric vehicles emphasize energy conservation and carbon reduction, they are gradually being transitioned from fuel-driven to electricity-driven. In particular, a power source of an electric vehicle (commonly referred to as an electric car) is a battery, which requires charging for the battery to maintain the endurance of the electric vehicle. On the other hand, since a battery in an electric vehicle may be used to store power, when the battery power of the battery is sufficient, the battery power may also be used to feed back to an electric vehicle charger, so as to supply power to a power device coupled to the electric vehicle charger (for example but not limited to, a power grid or an emergency power socket, etc.). However, in conventional electric vehicle chargers, when the battery power of the electric vehicle is used to supply power to the power device, the power device is considered as a load and is generally unable to supply power to the electric vehicle charger. Therefore, a system controller inside the electric vehicle charger lacks the power source and fails to be successfully enabled, so as to cause the electric vehicle charger to be unable to set a charging and discharging mode by a handshake communication with the electric vehicle. Therefore, this situation leads to operational inconvenience and difficulty in setting the operation mode.

Therefore, how to design a wake-up circuit for an electric vehicle charger and a method for operating the same to resolve that the issue where the system controller inside the electric vehicle charger fails to be successfully enabled when the electric vehicle needs to feed power back to the electric vehicle charger has become a critical topic in this field.

### SUMMARY

In order to solve the problems above, the present disclosure provides a method for operating an electric vehicle charger, and the electric vehicle charger is configured to be coupled to a power device and an electric vehicle by a power path. The method includes steps of: disconnecting the power path when the power device fails to provide a device power to the power path, and causing an auxiliary power circuit of the electric vehicle charger to be unable to provide a first DC voltage to supply power to a system controller of the electric vehicle charger according to the device power, thereby disabling the system controller and entering a power outage state; according to a trigger, informing the electric vehicle to set a feed mode by a transistor that is turned on in the power outage state; causing the electric vehicle to provide a vehicle power to the power path in the feed mode; causing the auxiliary power circuit to provide the first DC voltage to supply power to the system controller according to the vehicle power, thereby enabling the system controller; performing a handshake communication between the system controller and the electric vehicle when the system controller is enabled, and connecting the power path when the handshake communication is completed, thereby feeding the vehicle power to the power device.

In order to solve the problems above, the present disclosure provides a wake-up circuit for an electric vehicle charger, and the wake-up circuit includes a switch. The switch is configured to receive a trigger, and the transistor includes a first end and a second end. The first end is coupled to a proximity pilot pin of the system controller, and the second end is coupled to a reference potential by the switch. When the transistor is turned on, the proximity pilot pin is coupled to the reference potential by the transistor to adjust an impedance of the proximity pilot pin from a first impedance to a second impedance, so as to notify the electric vehicle to be set to the feed mode by the second impedance.

In order to solve the problems above, the present disclosure provides a wake-up circuit for an electric vehicle charger, and the wake-up circuit includes a connection end, a pulse signal generator, and a switch. The connection end is configured to be coupled to an energy storage device, and the pulse signal generator is coupled to a control pilot pin of the system controller. The switch is configured to receive a trigger, and the transistor includes a first end, a second end, and a control end. The first end is coupled to the connection end, the second end is coupled to the pulse signal generator, and the control end is coupled to the switch. When the transistor is turned on, the pulse signal generator is configured to provide a pulse signal to the control pilot pin according to an energy storage voltage of the energy storage device, so as to notify the electric vehicle to be set to the feed mode by the second impedance.

The main purpose and effect of the present disclosure is that after the electric vehicle charger is connected to the electric vehicle, it provides a specific signal to notify the electric vehicle by a trigger provided by a user, so that the electric vehicle provides the vehicle power to wake-up the system controller inside the electric vehicle charger. Therefore, the electric vehicle charger of the present disclosure may be started properly in the power outage state, and no need for an external power supply to keep the electric vehicle charger in a continuously operating state.

It is to be understood that both the foregoing general description and the following detailed description are exemplary, and are intended to provide further explanation of the present disclosure as claimed. Other advantages and features of the present disclosure will be apparent from the following description, drawings, and claims.

### BRIEF DESCRIPTION OF DRAWINGS

The present disclosure can be more fully understood by reading the following detailed description of the embodiment, with reference made to the accompanying drawing as follows:
FIG. 1 is a circuit block diagram of an electric vehicle charger according to the present disclosure.
FIG. 2 is a circuit block diagram of a first embodiment of a wake-up circuit according to the present disclosure.
FIG. 3A is a first operation flowchart of the first embodiment of the electric vehicle charger according to the present disclosure.
FIG. 3B is a second operation flowchart of the first embodiment of the electric vehicle charger according to the present disclosure.
FIG. 4 is a circuit block diagram of a second embodiment of the wake-up circuit according to the present disclosure.
FIG. 5A is a first operation flowchart of the second embodiment of the electric vehicle charger according to the present disclosure.
FIG. 5B is a second operation flowchart of the second embodiment of the electric vehicle charger according to the present disclosure.

### DETAILED DESCRIPTION

Reference will now be made to the drawing figures to describe the present disclosure in detail. It will be understood that the drawing figures and exemplified embodiments of present disclosure are not limited to the details thereof.

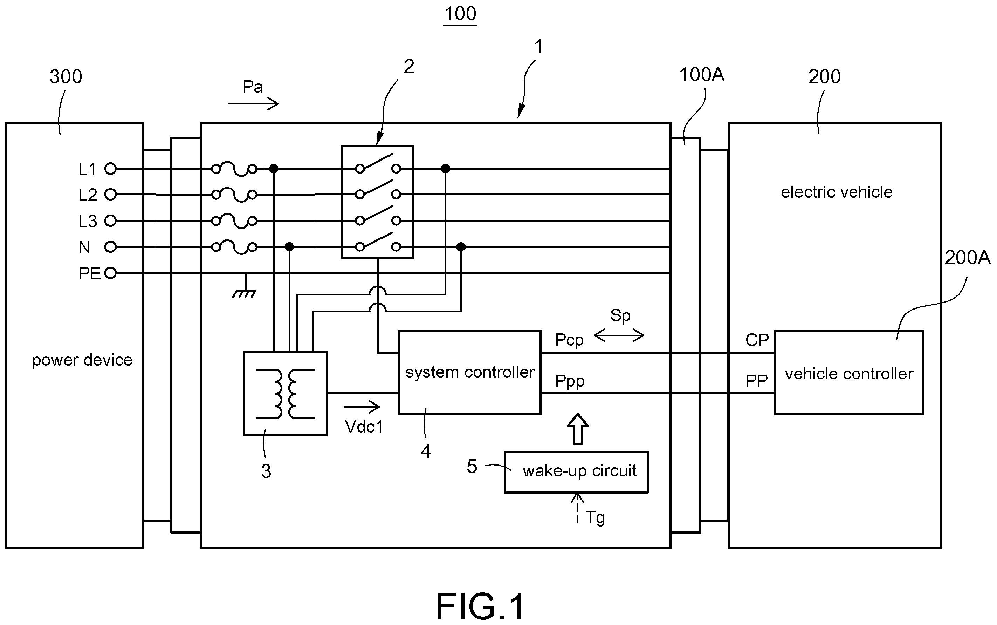

Please refer to FIG. 1, which shows a circuit block diagram of an electric vehicle charger according to the present disclosure. In FIG. 1, the electric vehicle charger 100 includes a power path 1, a main switch 2, an auxiliary power circuit 3, a system controller 4, and a wake-up circuit 5. One end of the power path 1 is coupled to the electric vehicle 200, and the other end of the power path 1 is coupled to the power device 300. In particular, the power device 300 may be a power supply device such as a power grid or an electric vehicle charging station, depending on the type of electric vehicle charger 100 and is not limited thereto. The main switch 2 is connected in series with the power path 1, and the system controller 4 is used to control the main switch 2 to turn on/off to connect or disconnect the power path 1. The auxiliary power circuit 3 is coupled to the power path 1 to convert a power on the power path 1 to supply power to the system controller 4. Specifically, the auxiliary power circuit 3 is coupled between the main switch 2 and the power device 300, and between the main switch 2 and the electric vehicle 200. Furthermore, when either the power device 300 or the electric vehicle 200 supplies power, the auxiliary power circuit 3 may perform power conversion to supply power to the system controller 4.

On the other hand, the system controller 4 includes a control pilot pin Pcp and a proximity pilot pin Ppp, and the control pilot pin Pcp and a proximity pilot pin Ppp are plugged into the electric vehicle 200 by a connection port 100A such as a charging gun and are respectively coupled to the corresponding ends of the vehicle controller 200A inside the electric vehicle 200. That is, the control pilot pin Pcp is coupled to the control pilot end CP of the vehicle controller 200A, and the proximity pilot pin Ppp is coupled to the proximity pilot end PP of the vehicle controller 200A. In particular, since the two are connected, for simplicity, only one end (or terminal) is recorded below. For example, if a component is described as being coupled to the proximity pilot end PP, although it is not described that the component is coupled to the proximity pilot pin Ppp, since the two are connected, the meaning it represents also includes that the component is coupled to the proximity pilot pin Ppp, and so on, and is not repeated description thereto.

Furthermore, the proximity pilot pin Ppp mainly determines whether the connection port 100A is correctly plugged into the electric vehicle 200 by the impedance/voltage along the path when the connection port 100A is plugged into the electric vehicle 200. Furthermore, the system controller 4 may also determine how much current (i.e., the upper limit of the charging and discharging current) may transmit on the power path by the impedance/voltage along the path. The control pilot pin Pcp mainly performs handshake communication with the electric vehicle 200 by transmitting a pulse signal Sp after the system controller 4 is enabled (i.e., to transmit the pulse signal Sp to each other), so as to obtain parameters such as the charging/discharging state and the charging/discharging current of the electric vehicle 200.

When the power device 300 is in a power energized, and the electric vehicle charger 100 is not yet coupled to the electric vehicle 200, the auxiliary power circuit 3 may continuously convert a device power Pa provided by the power device 300 to a first DC voltage Vdc1, and provide the first DC voltage Vdc1 to supply power to the system controller 4. Therefore, the system controller 4 is usually already enabled and enters an operating state, and the operating state may generally be preset to the charging mode. Therefore, when the electric vehicle 200 is connected to the electric vehicle charger 100, the system controller 4 may determine whether the connection port 100A is correctly plugged into the electric vehicle 200 by the proximity pilot pin Ppp, and obtain parameters such as the charging/discharging state and the charging/discharging current of the electric vehicle 200 by the handshake communication with the electric vehicle 200 by the control pilot pin Pcp. Furthermore, when the handshake communication is completed, the system controller 4 turns on the main switch 2 to transmit the device power Pa provided by the power device 300 to the electric vehicle 200 to charge the electric vehicle 200.

On the contrary, when the power device 300 experiences a power outage, the auxiliary power circuit 3 lacks a power source and therefore is unable to provide the first DC voltage Vdc1 to supply power to the system controller 4. Therefore, the system controller 4 is disabled and enters a power outage state. That is, in conventional electric vehicle chargers, when the system controller 4 is in the power outage, the entire electric vehicle charger 100 fails to operate, so that even if the electric vehicle 200 is plugged into the connection port 100A, the electric vehicle charger 100 fails to generate any response to the plugging of the electric vehicle 200. In contrast, the electric vehicle charger 100 of the present disclosure may be enabled by the operation of the wake-up circuit 5 in the power outage state and the electric vehicle 200 is plugged into the connection port 100A, and then the electric vehicle charger 100 may attempt to communicate with the electric vehicle 200 to adjust to a feed mode, so that the electric vehicle 200 may feed power to the power device 300. Specifically, the wake-up circuit 5 receives the trigger Tg and adjusts the voltage, signal and other parameters on the proximity pilot pin Ppp or the control pilot pin Pcp according to the trigger Tg, so that when the electric vehicle charger 100 is in the power outage state, it is enabled with the assistance of the electric vehicle 200, so that the system controller 4 may attempt to communicate with the electric vehicle 200.

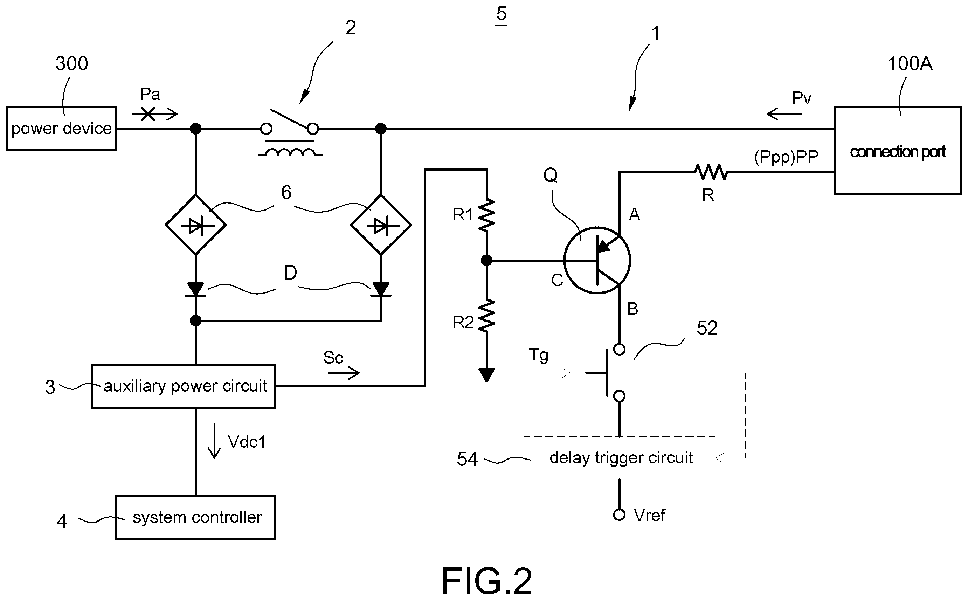

Please refer to FIG. 2, which shows a circuit block diagram of a first embodiment of a wake-up circuit according to the present disclosure, and also refer to FIG. 1. The electric vehicle charger 100 of FIG. 2 mainly shows the detailed structures of the electric vehicle charger 100 and the wake-up circuit 5 under the circuit architecture of FIG. 1. Specifically, the electric vehicle charger 100 may further include two sets of bridge rectifier circuits 6 and two sets of diodes D. The bridge rectifier circuits 6 are respectively coupled to both ends of the main switch 2, and the diodes D are respectively coupled between the bridge rectifier circuits 6 and the auxiliary power circuit 3. The auxiliary power circuit 3 may be, for example but not limited to, a flyback conversion circuit, but is not limited thereto. Any power conversion circuit capable of converting power to DC voltage should be included in the scope of this embodiment. The bridge rectifier circuits 6 may rectify AC power on the power path 1, and if the power path 1 carries DC power, the bridge rectifier circuits 6 may be omitted.

The diodes D may be ORing diodes, which may provide a better protection function for the electric vehicle charger 100. Furthermore, the ORing diodes are mainly used to isolate both sides of the main switch 2. Specifically, in order to comply with electrical safety tests such as the high-potential test (Hi-pot test), both sides of the main switch 2 and the power path 1 to the auxiliary power circuit 3 are usually required to withstand voltages above 1000V. However, relying solely on the bridge rectifier circuits 6 might not be able to withstand such a high voltage, forcing the use of high-specification bridge rectifier circuits, which increases the circuit cost. Moreover, if an active switching element (such as but not limited to a relay) is used, it must be additionally powered for control. However, when the power device 300 is in the power outage, it becomes difficult to generate additional power to drive the relay to turn on. Therefore, using the ORing diodes to increase the withstand voltage is a better solution, as it enhances the withstand voltage to make it meet safety standards, and requires no additional power for operation. However, if the electric vehicle charger 100 does not consider the safety standards, the diodes D may not be additionally configured.

The wake-up circuit 5 is coupled between the proximity pilot end PP and the auxiliary power circuit 3 of the electric vehicle 200 and the wake-up circuit 5 includes transistor Q and switch 52. The transistor Q includes a first end A, a second end B, and a control end C, and the transistor Q is not limited to a particular type. Any semiconductor element that may be used for turn on/off (for example, but not limited to a BJT, FET, or other semiconductor element), it should be included in the scope of this embodiment. In one embodiment, the transistor Q may be a PNP transistor, for example, but is not limited thereto and may be adaptively substituted according to the operating logic of the present disclosure. The first end A of the transistor Q is coupled to the proximity pilot end PP, and the second end B of transistor Q is coupled to one end of switch 52. The other end of switch 52 is coupled to the reference potential Vref, and since it is not easy to obtain additional power when the electric vehicle charger 100 is in the power outage state, it is a better implementation that the reference potential Vref is a ground potential, but is not limited thereto, and it is possible to use, for example, but not limited to, a supercapacitor to provide a potential that is not zero. The switch 52 is used to receive the trigger Tg provided by the user to connect two ends of contacts of the switch 52 (i.e., turn on), and the switch 52 may be a switch element such as a push switch or a touch switch that is turned on according to the trigger Tg. In the present disclosure, the switch 52 is illustratively exemplified as a push-button switch.

When the device power Pa invalid due to power outage, failure, power allocation and other reasons of the power device 300, and the electric vehicle charger 100 is not yet coupled to the electric vehicle 200, there will be no power on the power path 1 from the power device 300 to the main switch 2 due to the device power Pa invalidated. Regardless of the reason, the auxiliary power circuit 3 is unable to obtain compliant device power Pa by the power path 1 between the power device 300 and the main switch 2. Therefore, the auxiliary power circuit 3 fails to provide the first DC voltage Vdc1 according to the device power Pa, and provides the first DC voltage Vdc1 to supply power to the system controller 4. Therefore, the system controller 4 is forced to shut down (disable) and enter the power outage state, causing the entire electric vehicle charger 100 to stop operating.

In the power outage state, when the electric vehicle 200 is coupled to the connection port 100A of the electric vehicle charger 100, the electric vehicle charger 100 fails to be enabled due to the power outage, so that the electric vehicle charger 100 fails to generate any response to the plugging of the electric vehicle 200. Furthermore, since the electric vehicle 200 is coupled to the electric vehicle charger 100 and the user has not yet pressed the switch 52, the switch 52 is not pressed and fails to generate the trigger Tg, so that the impedance of the proximity pilot end PP is maintained for a first impedance in a normal charging mode, and the electric vehicle 200 has not yet been changed to the feed mode and fails to provide the vehicle power Pv to the power path 1.

In general, when the proximity pilot pin Ppp of the system controller 4 is usually coupled to the proximity pilot end PP of the electric vehicle 200, a specific current is output from the proximity pilot end PP. The specific current flows through the predetermined impedance (such as but not limited to resistor) on this path to generate a voltage, and the proximity pilot pin Ppp of the system controller 4 or the proximity pilot end PP of the electric vehicle 200 may determine what the impedance is by detecting the voltage. In order to avoid the following description of this feature being too long-winded, only the impedance change is briefly described below without elaborating on the principle of the impedance change.

Since there is a voltage at the first end A of the transistor Q, and the second end B is coupled to one end of the switch 52, and since the control end C of the transistor Q has no output because the auxiliary power circuit 3 has no power source (take FIG. 2 as an example, there is no output control signal Sc), so that the control end C forms a low potential (take FIG. 2 as an example, the control end C is connected to the low potential by the resistor R2), and the transistor Q is turned on. Then, when the user presses the switch 52, the trigger Tg is generated due to the pressing of the switch 52, so that the contact at the two ends of switch 52 is further connected, and the transistor Q is turned on at this time. Therefore, the proximity pilot end PP is coupled to the reference potential Vref by the transistor Q that is turned on, so that the impedance of the proximity pilot end PP changes from the first impedance to a second impedance. Therefore, the electric vehicle 200 may detect that the impedance from the proximity pilot end PP to the proximity pilot pin Ppp has changed. In this way, the electric vehicle 200 may be informed that the operating mode needs to be set to the feed mode. That is, the proximity pilot end PP is connected to the reference potential Vref to change the voltage on its path, and the impedance of this path is also changed, so that the electric vehicle 200 may detect the change in voltage to obtain that the impedance is changed, and set the operating mode to the feed mode accordingly.

On the other hand, the wake-up circuit 5 selectively includes a resistor R. The resistor R is connected in series in the path from the proximity pilot end PP to the reference potential Vref, and the resistor R may be used to limit the current in the path from the proximity pilot end PP to the reference potential Vref in addition to changing the impedance of the proximity pilot end PP, so as to prevent the electronic elements (i.e., the transistor Q and the switch 52) in the path from being damaged by excessive current in the path. Therefore, in the situation with resistor R, the electric vehicle 200 may make the resistor R be incorporated to the path connecting the proximity pilot end PP to the reference potential Vref according to the user pressing the switch 52, so that the impedance of the proximity pilot end PP is changed from the first impedance to the second impedance according to the influence of the resistor R. In this way, the electric vehicle 200 may be set to feed mode and supply the vehicle power Pv to the power path 1 (at this time, the system controller 4 has not yet controlled the main switch 2 to turn on).

In the feed mode, the auxiliary power circuit 3 may supply the system controller 4 with the first DC voltage Vdc1 according to the vehicle power Pv. Taking the structure in FIG. 2 as an example, the vehicle power Pv may be rectified to DC power by the bridge rectifier circuit 6 and supplied to the auxiliary power circuit 3, so that the auxiliary power circuit 3 converts the DC power to the first DC voltage Vdc1 and supplies power to the system controller 4 accordingly. When the system controller 4 is enabled by the power supply, the system controller 4 and the electric vehicle 200 perform handshake communication with each other by the control pilot pin Pcp to obtain parameters such as the charging and discharging status and charging and discharging current of the electric vehicle 200. Furthermore, after the system controller 4 has completed handshake communication with the electric vehicle 200, the system controller 4 turns on the main switch 2 to transmit the vehicle power Pv provided by the electric vehicle 200 to the power device 300 and feed power to the power device 300.

In particular, the electric vehicle 200 may optionally set this state of the feed mode to a temporary feed mode (i.e., the feed mode that has not completed handshake communication is set to temporary feed mode, which may be referred to as temporary mode), and when the electric vehicle 200 completes handshake communication with the system controller 4 in the temporary mode, the electric vehicle 200 may maintain the operating mode in the feed mode (which is steady-state feed mode and may be referred to as steady-state mode), and turn on the main switch 2 to feed the vehicle power Pv to the power device 300. In particular, temporary mode and steady-state mode will be described in further detail below, and is not repeated description thereto.

On the other hand, in order to prevent the user from mistakenly triggering switch 52 and causing the electric vehicle charger 100 to be malfunctioned and performed erroneous operation. Therefore, the electric vehicle charger 100 of the present disclosure is further configured with a foolproof mechanism to prevent the above situation from occurring. Specifically, the electric vehicle 200 may determine that the trigger Tg is a valid trigger according to the trigger Tg being maintained for a first predetermined time, and may set the feed mode according to the valid trigger. In this way, the risk of the electric vehicle charger 100 malfunctioning due to the user mistakenly triggering switch 52 may be avoided. Furthermore, in the circuit structure of FIG. 2, the electric vehicle 200 may determine that the user has actually pressed the switch 52 and confirm that the trigger Tg is the valid trigger after detecting that the impedance of the proximity pilot end PP has been changed and maintained for the first predetermined time (for example, but not limited to 3 seconds), and determines that the operating mode needs to be set to the feed mode accordingly.

Alternatively, the switch 52 may be coupled to a delay trigger circuit 54 (indicated by a dotted box), or switch 52 may combine with the delay trigger circuit 54 to form a delay trigger switch. The delay trigger circuit 54 (not shown in the FIG.) may trigger the proximity pilot end PP to be coupled to the reference potential Vref after the user presses the switch 52 and maintains for the first predetermined time (for example, but not limited to, 3 seconds), so that its impedance changes from the first impedance to the second impedance. Except for this, there are various other ways to achieve a foolproof mechanism, which are not repeated description thereto. Therefore, after the first predetermined time, the electric vehicle 200 may detect that the impedance of the proximity pilot end PP has been changed, so that the electric vehicle 200 may accordingly change to the feed mode and supply the vehicle power Pv to the power path 1.

On the other hand, the auxiliary power circuit 3 may provide another foolproof mechanism by controlling the transistor Q. Specifically, when the auxiliary power circuit 3 is in a power energized and operating, it means that one of the power device 300 or the electric vehicle 200 has provided power to the power path 1, and the auxiliary power circuit 3 has converted power that is suitable for operating the system controller 4 (that is, the first DC voltage Vdc1), so that the system controller 4 operates normally. Therefore, the control end C of the transistor Q is coupled to the auxiliary power circuit 3, and when the auxiliary power circuit 3 may provide the first DC voltage Vdc1, the auxiliary power circuit 3 also provides the control signal Sc to the control end C of the transistor Q, so that the control end C of the transistor Q is accordingly locked by the control signal Sc and turned off. Therefore, it causes the pressing of switch 52 to be invalid, so that even if the user presses switch 52, the transistor Q still cannot be successfully turned on to change the impedance of the proximity pilot end PP to the second impedance. In this situation, the proximity pilot end PP may no longer be coupled to the reference potential Vref by the transistor Q, thereby causing the impedance to be adjusted to the first impedance, and the user may no longer change the operating mode of the electric vehicle 200 by the trigger Tg.

In particular, the control signal Sc may be the first DC voltage Vdc1 (for example, but not limited to 12V), and the first DC voltage Vdc1 is generally used to supply power to the system controller 4, but is not limited thereto. That is, the control signal Sc may also be any specific voltage corresponding to the first DC voltage Vdc1 (for example, but not limited to, it may be the voltage of any node obtained by the controller inside the auxiliary power circuit 3 through control). On the other hand, between the auxiliary power circuit 3 and the control end C, a voltage divider circuit R1, R2 may selectively include. The voltage divider circuits R1, R2 mainly divide the voltage level of the control signal Sc provided by the auxiliary power circuit 3 to a voltage level that is suitable for turning off/on the transistor Q (depending on the type of transistor Q and its circuit structure), so as to prevent the transistor Q from being damaged by receiving an unsuitable voltage. However, if the control signal Sc provided by the auxiliary power circuit 3 is suitable for driving the transistor Q, the voltage divider circuits R1, R2 may be omitted. For example, in the circuit structure of FIG. 2, a PNP type transistor Q is used and the resistor R2 acts as a pull-low resistor to turn on the transistor Q. However, if a different type of semiconductor element or a different circuit structure is used, the pull-low resistor may be omitted.

In addition, the electric vehicle charger 100 may be provided with an additional foolproof mechanism by the control pilot pin Pcp. Specifically, since the system controller 4 may receive or send the pulse signal Sp by the control pilot pin Pcp for handshake communication, it means that the system controller 4 is still in operation and may dominate the operation of the electric vehicle charger 100. Therefore, when the system controller 4 or the electric vehicle 200 detects that the system controller 4 may receive or send the pulse signal Sp by the control pilot pin Pcp to perform handshake communication with each other (for example, but not limited to, self-detection by transmitting test signals and other methods to obtain), even if the impedance of the proximity pilot pin PP of the electric vehicle 200 is changed to the second impedance (equivalent to the impedance of the proximity pilot pin Ppp, since the proximity pilot pin PP and the proximity pilot pin Ppp are generally of the same impedance due to coupling together), the electric vehicle 200 (or the system controller 4) ignores that the impedance is changed to the second impedance (i.e., it is not set to the feed mode according to the impedance being changed to the second impedance). Therefore, even if the user presses the switch 52, the electric vehicle 200 fails to change the operating mode that as currently executed accordingly (the operating mode that as currently performed is generally preset to be the charging mode in which the electric vehicle 200 receives power).

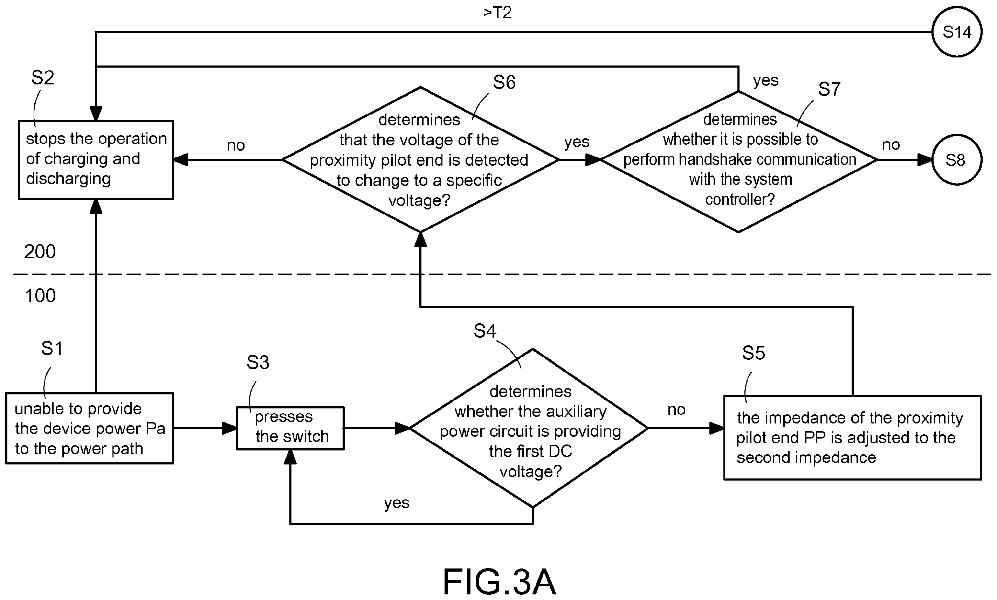

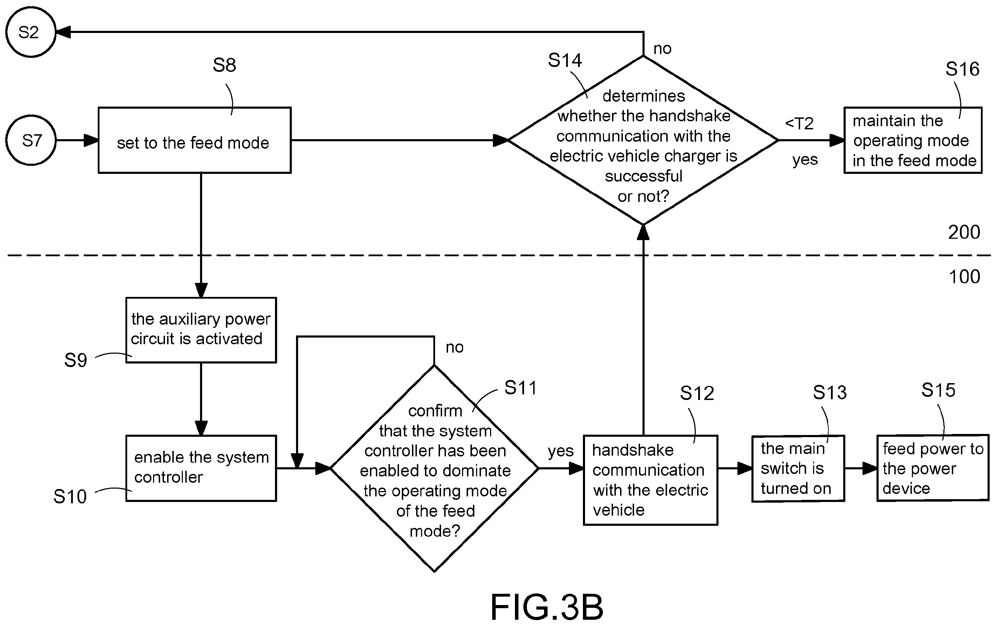

Please refer to FIG. 3A which shows a first operation flowchart of the first embodiment of the electric vehicle charger according to the present disclosure, FIG. 3B which shows a second operation flowchart of the first embodiment of the electric vehicle charger according to the present disclosure, and also refer to FIGs. 1-2. Wherein the flow of FIG. 3B is mainly a continuation of the flow of FIG. 3A. In FIG. 3A, the operation flow is divided to the operation flow at the electric vehicle charger 100 and the operation flow at the electric vehicle 200, and the two are complementary to each other. In particular, this operation flow is only a better implementation of the various operation flows, but is not limited thereto. In FIG. 3A, the operation flow is divided to the operation flow at the electric vehicle charger 100 and the operation flow at the electric vehicle 200, and the two are complementary to each other. In particular, this operation flow is only a better implementation of the various operation flows, but is not limited thereto. In FIG. 3A, when the power device 300 is unable to provide the device power Pa to the power path 1 (step S1), the electric vehicle 200 stops the operation of charging and discharging (step S2). Furthermore, after step S1, when the user presses the switch 52 (step S3), the wake-up circuit 5 determines whether the auxiliary power circuit 3 is providing the first DC voltage Vdc1 (for example, but not limited to, 12V, step S4). When the determination is yes, it returns to step S3. On the contrary, when the determination is no, the impedance of the proximity pilot end PP is adjusted to the second impedance (step S5). At this time, the electric vehicle 200 determines that the voltage of the proximity pilot end PP is detected to change to a specific voltage (step S6). When the voltage of the proximity pilot end PP changes to the specific voltage, it means that the impedance of the proximity pilot end PP changes to the second impedance. Then, the electric vehicle 200 determines whether it is possible to perform handshake communication with the system controller 4 (step S7).

In particular, the foolproof mechanism may be included in step S6. That is, step S6 may also determine whether the time that the impedance changes to the second impedance is maintained for the first predetermined time T1 (for example, but not limited to 3 seconds). When the determination result of step S6 is no, return to step S2, and otherwise enter step S7. Furthermore, step S7 also serves as the protection of the foolproof mechanism. Therefore, if the determination result is yes, it means that when the two may communicate with each other and the system controller 4 is still in operation and may dominate the operation of the electric vehicle charger 100. Therefore, step S2 is returned to wait for the indication of the system controller 4. On the contrary, if the determination is no, it means that the system controller 4 is unable to operate and is in the power outage state. Therefore, the electric vehicle 200 is set to the feed mode (step S8) to provide the vehicle power Pv to the power path 1.

In particular, the feed mode of step S8 is only a temporary mode, mainly to enable the system controller 4 so that the electric vehicle charger 100 may perform active charging and discharging operations. Therefore, the electric vehicle 200 may preset the discharging time of this mode to the second predetermined time T2 (for example, but not limited to 10 minutes), so as to avoid the electric vehicle 200 continuously discharging and causing a power waste when the system controller 4 cannot be successfully enabled. In the operation process of the electric vehicle charger 100, since the electric vehicle 200 provides vehicle power Pv to the power path 1, the auxiliary power circuit 3 is activated (step S9), so that it may convert the vehicle power Pv on the power path 1 to supply power to the system controller 4. Then, enable the system controller 4 (step S10, at this time, the system controller 4 has not yet controlled the main switch 2 to turn on) and confirm that the system controller 4 has been enabled to dominate the operating mode of the feed mode (step S11). If step S11 is not completed, it means that the system controller 4 has not yet been enabled, so it returns to step S11 to continue waiting. On the contrary, it means that the system controller 4 has been enabled, and the pulse signal Sp is provided by the control pilot pin Pcp for handshake communication with the electric vehicle 200 (step S12). Furthermore, after the system controller 4 and the electric vehicle 200 have completed handshake communication, the main switch 2 is turned on (step S13) to feed power to the power device 300 (step S15).

In particular, the feed mode set in step S11 is mainly that the system controller 4 adjusts the temporary mode (temporary feed mode) temporarily set by the electric vehicle 200 to the steady-state mode (steady-state feed mode) generally dominated by the system controller 4, which is a normal feed mode. On the other hand, when executing the operation flow of the electric vehicle charger 100 in steps S9 to S11, the electric vehicle 200 determines whether the handshake communication with the electric vehicle charger is successful or not (step S14), which is mainly to determine whether the system controller 4 has completed the handshake communication with the electric vehicle 200. When the system controller 4 has not completed handshake communication with the electric vehicle 200 within the second predetermined time T2 (for example, but not limited to 10 minutes), the system controller 4 returns to step S2 to make the electric vehicle 200 stop providing vehicle power Pv. On the contrary, the electric vehicle 200 may maintain the operating mode in the feed mode according to the instructions of the system controller 4 (step S16). This feed mode is not necessary to preset the time of the feed (it belongs to the steady-state mode), and the electric vehicle 200 may subsequently operate correspondingly according to the handshake communication from the system controller 4. In one implementation, the detailed operation methods not described in FIGs. 3A to 3B may be referred to FIG. 2, and is not repeated description thereto.

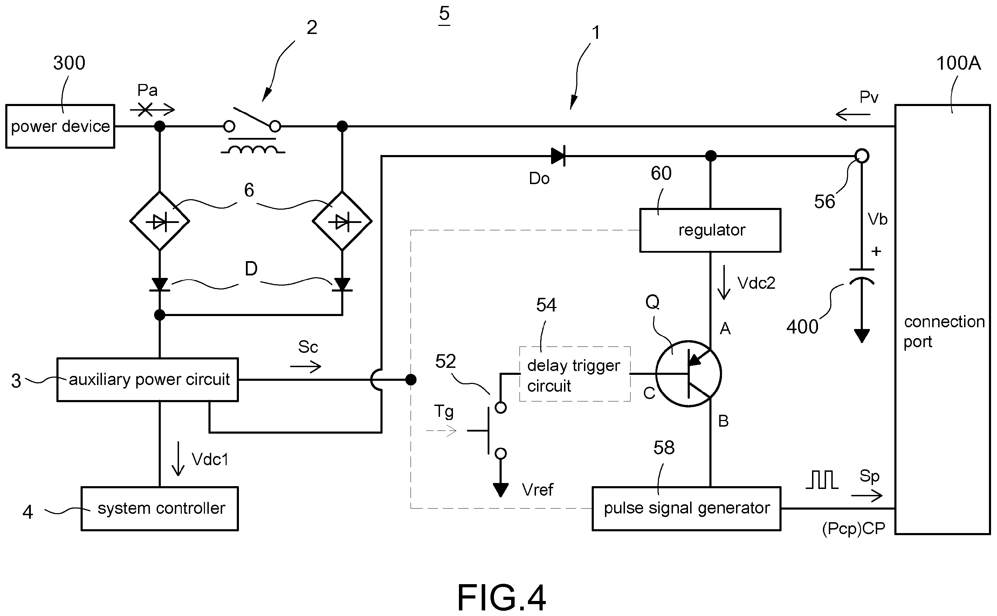

Please refer to FIG. 4 which shows a circuit block diagram of a second embodiment of the wake-up circuit according to the present disclosure, and also refer to FIGs. 1-3B. In FIG. 4, the main operating mode is similar to FIG. 2, in that when the system controller 4 is in the power outage state, the electric vehicle 200 is notified to set to feed mode according to the trigger Tg, and similar operations are continued until the system controller 4 connects to the power path 1. Therefore, the structure of the electric vehicle charger 100 of FIG. 4 is similar to FIG. 2, differing only in that the wake-up circuit 5 is not exactly the same. Furthermore, the wake-up circuit 5 of FIG. 4 includes a transistor Q, a switch 52, a connection end 56, and a pulse signal generator 58. The connection end 56 is coupled to an energy storage device 400 that provides an energy storage voltage Vb, and the pulse signal generator 58 is coupled to the control pilot end CP of the electric vehicle 200 (that is, it is also coupled to control pilot pin Pcp of system controller 4). The structure and function of the switch 52 and the transistor Q are similar to FIG. 2, and the first end A of the transistor Q is coupled to the connection end 56. The second end B of transistor Q is coupled to pulse signal generator 58, and the control end C of transistor Q is coupled to switch 52.

In particular, the energy storage device 400 may be an external battery, and the external battery may be, for example but not limited to, a supercapacitor, a carbon-zinc battery, rechargeable battery, or other easily available batteries. Since it is difficult to obtain additional power in a remote area far from a city, if the electric vehicle 200 does not have a function of automatically setting itself to the feed mode (temporarily), the electric vehicle charger 100 still fails to be successfully enabled, causing inconvenience in use. Therefore, the wake-up circuit 5 of FIG. 4 may utilize the connection end 56 to couple to the external battery to avoid the above situation. Furthermore, when the electric vehicle charger 100 is fixed device that is not easy to move, the operator may also use a simple battery replacement method to make the electric vehicle charger 100 equipped with a power outage wake-up function.

Further, the operation of the system controller 4 being unable to enter a power outage state may be referenced in FIG. 2. Furthermore, when the user presses the switch 52, the control end C of the transistor Q is coupled to the reference potential Vref by the trigger Tg, so that the transistor Q turns on. When the transistor Q is turned on, the pulse signal generator 58 is enabled by supplying the energy storage voltage Vb of the energy storage device 400. When the pulse signal generator 58 is enabled, the pulse signal generator 58 may provide a pulse signal Sp to the control pilot end CP of the electric vehicle 200. In this way, the electric vehicle 200 may be notified by the pulse signal Sp that the operating mode needs to be set to the feed mode.

As everyone knows, the energy storage voltage Vb changes according to the energy level of the energy storage device 400. Therefore, in order to prevent the energy storage voltage Vb of the energy storage device 400 from being insufficient to enable the pulse signal generator 58 when the energy storage device 400 is at low energy level, the wake-up circuit 5 may selectively include a regulator 60. The regulator 60 is coupled between the connection end 56 and the pulse signal generator 58 and converts the energy storage voltage Vb to the second DC voltage Vdc2. In this way, the second DC voltage Vdc2 with a fixed voltage level may be provided to the pulse signal generator 58 to stably supply power to the pulse signal generator 58, so as to avoid the voltage level of the energy storage voltage Vb from being too low to enable the pulse signal generator 58. However, if the voltage level of the energy storage voltage Vb is not considered to be too low, the regulator 60 may be omitted. In this embodiment, the regulator 60 may preferably be a power conversion device with low power consumption, low cost such as a linear regulator (LDO), but it may also be a device having a power conversion function controlled by a controller such as, but not limited to, a DC converter. In addition, the auxiliary power circuit 3 provides the first DC voltage Vdc1 to supply power to the system controller 4, and the subsequent operation of the system controller 4 in handshake communication with the electric vehicle 200 may also be referenced in FIG. 2, and is not repeated description thereto.

On the other hand, the wake-up circuit 5 in FIG. 4 is similar to FIG. 2, and also has a similar operating method and foolproof mechanism. Specifically, in the circuit structure of FIG. 4, when the user presses the switch 52 for the first predetermined time T1, the energy storage device 400 also supplies power to the pulse signal generator 58 for the first predetermined time T1, so that the pulse signal generator 58 continues to provide the pulse signal Sp to the control pilot end CP during the first predetermined time T1 (for example, but not limited to 3 seconds). After detecting that the pulse Sp is maintained for the first predetermined time T1, the electric vehicle 200 may determine that the user has actually pressed the switch 52 to confirm that the trigger Tg is the valid trigger, and accordingly determine that the operating mode needs to be set to the feed mode. Alternatively, as described in FIG. 2, the switch 52 may be coupled to the delay trigger circuit 54 (indicated by a dotted box) to achieve an effect similar to FIG. 2, which is not repeated description thereto.

On the other hand, the auxiliary power circuit 3 may be coupled to the regulator 60 or the pulse signal generator 58. When the auxiliary power circuit 3 is coupled to the regulator 60 and the auxiliary power circuit 3 may provide the first DC voltage Vdc1, the auxiliary power circuit 3 also provides the control signal Sc to the regulator 60, so that the regulator 60 fails to provide the second DC voltage Vdc2 because the control signal Sc is disabled. In this way, the pulse signal generator 58 fails to provide the pulse signal Sp because it is not powered, and the electric vehicle 200 cannot be set to the feed mode accordingly. When the auxiliary power circuit 3 is coupled to the pulse signal generator 58 and the auxiliary power circuit 3 is capable of providing the first DC voltage Vdc1, the auxiliary power circuit 3 also provides the control signal Sc to the pulse signal generator 58, so that the pulse signal generator 58 fails to provide the pulse signal Sp because the control signal Sc is unable, and the electric vehicle 200 cannot be set to the feed mode accordingly. Although the component 58 may be oscillator in this embodiment, it is not limited thereto. Any pulse signal generator that can provide the pulse signal Sp (such as a controller) should be included in the scope of this embodiment.

In addition, when the energy storage device 400 is a supercapacitor or rechargeable battery, the auxiliary power circuit 3 may be coupled to the connection end 56. Furthermore, when the auxiliary power circuit 3 provides the first DC voltage Vdc1, the first DC voltage Vdc1 provided by the auxiliary power circuit 3 may charge the energy storage device 400. In this way, the use time of the energy storage device 400 may be extended, so that the electric vehicle charger 100 may replace the energy storage device 400 less frequently. On the other hand, in order to prevent the energy storage voltage Vb from flowing back to the auxiliary power circuit 3, the path from the auxiliary power circuit 3 to the connection end 56 may further include a unidirectional conduction element Do, and the direction of the unidirectional conduction element Do from the auxiliary power circuit 3 to the connection end 56 is forward biased (referring to the direction of current flow). In particular, the unidirectional conduction element Do may be, for example but not limited to, a semiconductor element such as a diode or a thyristor. In one embodiment, the operations not described in FIG. 4 are similar to FIG. 2, or may be inferred from FIG. 2, and is not repeated description thereto.

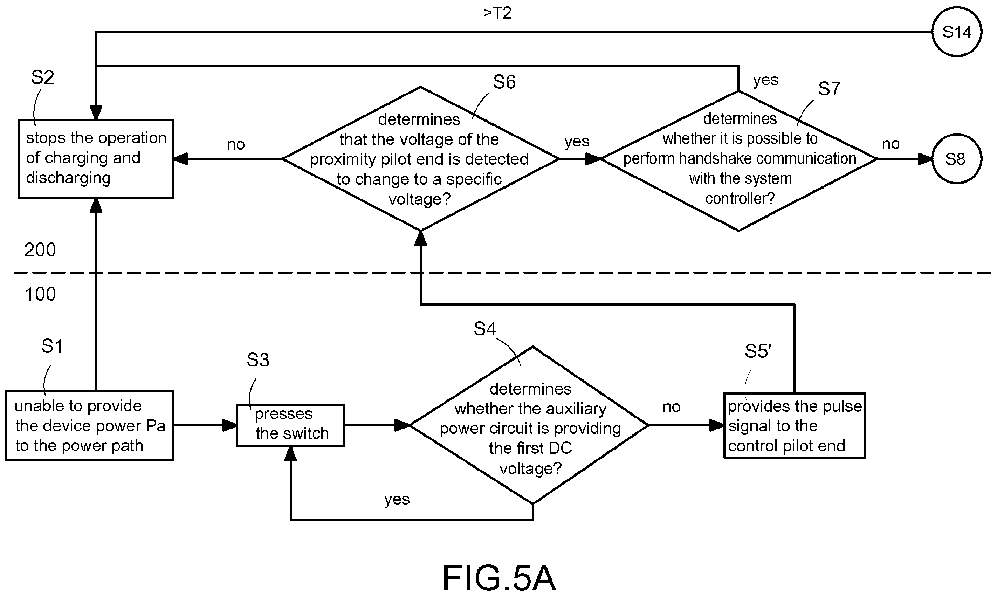

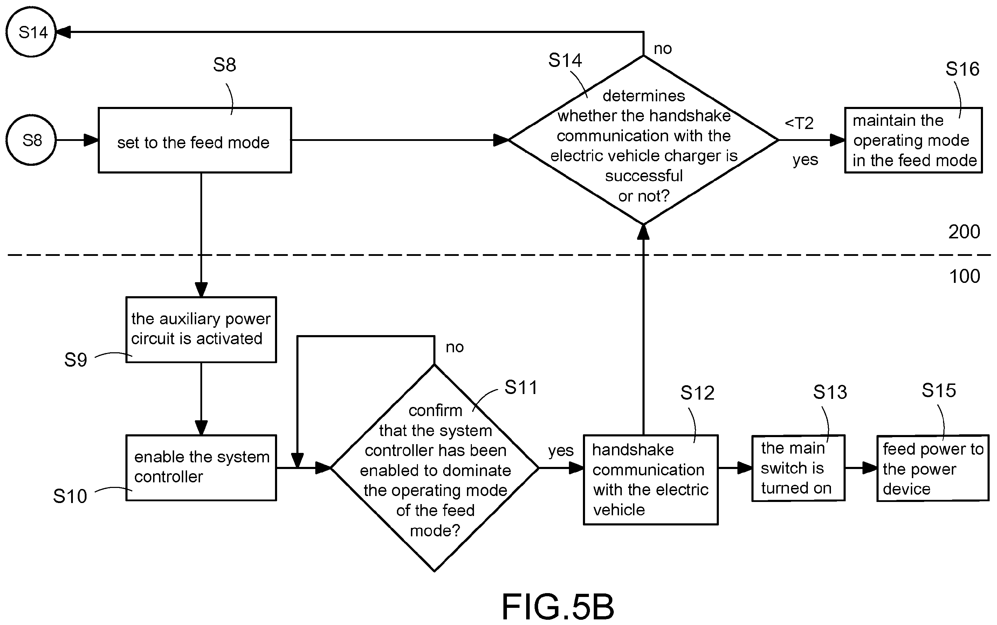

Please refer to FIG. 5A which shows a first operation flowchart of the second embodiment of the electric vehicle charger according to the present disclosure, FIG. 5B which shows a second operation flowchart of the second embodiment of the electric vehicle charger according to the present disclosure, and also refer to FIGs. 1-4. Wherein the flow of FIG. 5B is mainly a continuation of the flow of FIG. 5A. The operation flow of FIG. 5 is similar to FIG. 3A, and the difference is only that step S5 of FIG. 3A is replaced by S5', which is to provide the pulse signal Sp to the control pilot end CP (step S5'), so as to notify the electric vehicle 200 to be set to the feed mode by the pulse signal Sp. Except for this, the other operation flows are the same as FIG. 3A, and is not repeated description thereto. On the other hand, the operation flow of FIG. 5B is the same as FIG. 3B, and is not repeated description thereto.

In summary, through the operation flow of FIGs. 3A-3B and similar FIGs. 5A-5B of the present disclosure, a specific signal may be provided to notify the electric vehicle 200 (changing the impedance of the connection pilot end PP as shown in FIG. 2, or providing the pulse signal Sp to the control pilot end CP as shown in FIG. 4) by the trigger Tg provided by the user pressing the switch 52 after the electric vehicle charger 100 is connected to the electric vehicle 200, so that the electric vehicle 200 to provide vehicle power Pv to wake up the system controller 4 inside the electric vehicle charger 100. Therefore, the electric vehicle charger 100 of the present disclosure may be started properly in the power outage state, and no need for an external power supply (for example, but not limited to, an uninterruptible power system, a generator, or other device) to keep the electric vehicle charger 100 in a continuously operating state.

As will become apparent to the skilled person when studying the above disclosure, the subject-matter of the appended claims can also be combined in a different manner as specifically claimed. In particular the term "according to claim 1" and similar shall be deemed to encompass also the meaning "according to any of the preceding (antecedent) claims".

## Claims

1. A method for operating an electric vehicle charger (100), wherein the electric vehicle charger (100) is configured to be coupled to a power device (300) and an electric vehicle (200) by a power path (1), and the method comprising steps of:
disconnecting the power path (1) when the power device (300) fails to provide a device power (Pa) to the power path (1), and causing an auxiliary power circuit (3) of the electric vehicle charger (100) to be unable to provide a first DC voltage (Vdc1) to supply power to a system controller (4) of the electric vehicle charger (100) according to the device power (Pa), thereby disabling the system controller (4) and entering a power outage state,
according to a trigger (Tg), informing the electric vehicle (200) to set a feed mode by a transistor (Q) that is turned on in the power outage state,
causing the electric vehicle (200) to provide a vehicle power (Pv) to the power path (1) in the feed mode,
causing the auxiliary power circuit (3) to provide the first DC voltage (Vdc1) to supply power to the system controller (4) according to the vehicle power (Pv), thereby enabling the system controller (4), and
performing a handshake communication between the system controller (4) and the electric vehicle (200) when the system controller (4) is enabled, and connecting the power path (1) when the handshake communication is completed, thereby feeding the vehicle power (Pv) to the power device (300).

2. The method for operating the electric vehicle charger (100) as claimed in claim 1, further comprising a step of:
determining the trigger (Tg) as a valid trigger (Tg) according to the trigger (Tg) maintaining for a first predetermined time (T1), and setting the electric vehicle (200) to the feed mode according to the valid trigger (Tg).

3. The method for operating the electric vehicle charger (100) as claimed in claim 1, further comprising steps of:
presetting a second predetermined time (T2), and
stopping the electric vehicle (200) from providing the vehicle power (Pv) when the handshake communication fails to be completed during the second predetermined time (T2).

4. The method for operating the electric vehicle charger (100) as claimed in claim 1, further comprising steps of:
maintaining an impedance of a first impedance of a proximity pilot pin (Ppp) for coupling the electric vehicle (200) when a trigger (Tg) is absent,
according to the trigger (Tg), coupling the proximity pilot pin (Ppp) to a reference potential (Vref) by the transistor (Q) that is turned on, thereby adjusting the impedance from the first impedance to a second impedance; and
notifying the electric vehicle (200) to be set to the feed mode by the second impedance.

5. The method for operating the electric vehicle charger (100) as claimed in claim 4, further comprising steps of:
maintaining the impedance at the second impedance for a first predetermined time according to the trigger (Tg) being maintained for the first predetermined time (T1), and
according to the impedance being maintained for the second impedance for the first predetermined time (T1), determining that the trigger (Tg) is a valid trigger (Tg) by the electric vehicle (200), and setting the trigger (Tg) to the feed mode according to the valid trigger (Tg).

6. The method for operating the electric vehicle charger (100) as claimed in claim 4, further comprising a step of:
turning off the transistor (Q) according to the auxiliary power circuit (3) providing the first DC voltage (Vdc1), thereby adjusting the impedance to the first impedance.

7. The method for operating the electric vehicle charger (100) as claimed in claim 4, further comprising a step of:
according to a control pilot pin (Pcp) capable of receiving or sending a pulse signal (Sp) to the electric vehicle (200) with a handshake communication, without being set to the feed mode according to the impedance being changed to the second impedance.

8. The method for operating the electric vehicle charger (100) as claimed in claim 1, further comprising steps of:
maintaining a potential of a control pilot pin (Pcp) for coupling the electric vehicle (200) as a reference potential (Vref) when the trigger (Tg) is absent,
turning on the transistor (Q) according to the trigger (Tg), thereby supplying power to a pulse signal generator (58) by the transistor (Q) that is turned on, and
causing the pulse signal generator (58) to provide a pulse signal (Sp) to the control pilot pin (Pcp), thereby notifying the electric vehicle (200) to set the feed mode.

9. The method for operating the electric vehicle charger (100) as claimed in claim 8, further comprising steps of:
supplying power to the pulse signal generator (58) for a first predetermined time according to the trigger (Tg) maintaining for the first predetermined time; and
causing the electric vehicle (200) to be set to the feed mode according to the pulse signal (Sp) maintaining the first predetermined time (T1).

10. The method for operating the electric vehicle charger (100) as claimed in claim 8, further comprising a step of:
converting an energy storage voltage (Vb) provided by an energy storage device (400) to a second DC voltage (Vdc2), and supplying the second DC voltage (Vdc2) to the pulse signal generator (58) by the transistor (Q) that is turned on.

11. The method for operating the electric vehicle charger (100) as claimed in claim 10, further comprising a step of:
not providing the pulse signal (Sp) according to the auxiliary power circuit (3) providing the first DC voltage (Vdc1), and
charging the energy storage device (400) when the auxiliary power circuit (3) provides the first DC voltage (Vdc1).

12. A wake-up circuit (5) for an electric vehicle charger (100), the wake-up circuit (5) is configured to perform the operating method for the electric vehicle charger (100) as claimed in claim 1, and the wake-up circuit (5) comprising:
a switch (52) configured to receive a trigger (Tg),
wherein the transistor (Q) comprises a first end (A) and a second end (B), the first end (A) is coupled to a proximity pilot pin (Ppp) of the system controller (4), and the second end (B) is coupled to a reference potential (Vref) by the switch (52); when the transistor (Q) is turned on, the proximity pilot pin (Ppp) is coupled to the reference potential (Vref) by the transistor (Q) to adjust an impedance of the proximity pilot pin (Ppp) from a first impedance to a second impedance, so as to notify the electric vehicle (200) to be set to the feed mode by the second impedance.

13. The wake-up circuit (5) as claimed in claim 12, wherein the transistor (Q) further comprises a control end (C), and the control end (C) is coupled to the auxiliary power circuit (3); when the auxiliary power circuit (3) provides the first DC voltage (Vdc1), the transistor (Q) is turned off, and the proximity pilot pin (Ppp) fails to couple to the reference potential (Vref) by the transistor (Q), so as to adjust the impedance to the first impedance.

14. A wake-up circuit (5) for an electric vehicle charger (100), the wake-up circuit (5) is configured to perform the operating method for the electric vehicle charger (100) as claimed in claim 1, and the wake-up circuit (5) comprising:
a connection end (56) configured to be coupled to an energy storage device (400),
a pulse signal generator (58) coupled to a control pilot pin (Pcp) of the system controller (4), and
a switch (52) configured to receive a trigger (Tg),
wherein the transistor (Q) comprises a first end (A), a second end (B), and a control end (C), the first end (A) is coupled to the connection end (56), the second end (B) is coupled to the pulse signal generator (58), and the control end (C) is coupled to the switch (52); when the transistor (Q) is turned on, the pulse signal generator (58) is configured to provide a pulse signal (Sp) to the control pilot pin (Pcp) according to an energy storage voltage (Vb) of the energy storage device (400), so as to notify the electric vehicle (200) to be set to the feed mode by the second impedance.

15. The wake-up circuit (5) as claimed in claim 14, further comprising:
a regulator (60) coupled to the connection end (56) and the first end (A), and the regulator (60) configured to convert the energy storage voltage (Vb) to a second DC voltage (Vdc2), so as to provide the second DC voltage (Vdc2) to the pulse signal generator (58) by the transistor (Q) that is turned on,
wherein when the auxiliary power circuit (3) provides the first DC voltage (Vdc1), the pulse signal generator (58) is configured not to provide the pulse signal (Sp).
